(19) Europäisches Patentamt
European Patent Office
Office européen des brevets

(11) EP 4 189 048 B1

(12) FASCICULE DE BREVET EUROPEEN

(45) Date de publication et mention de la délivrance du brevet:
**04.09.2024 Bulletin 2024/36**

(21) Numéro de dépôt: **21746531.9**

(22) Date de dépôt: **08.07.2021**

(51) Classification Internationale des Brevets (IPC):
***C10L 1/197*** (2006.01) ***C10L 10/14*** (2006.01)
***C08F 210/02*** (2006.01) ***C08F 218/04*** (2006.01)
***C10L 1/16*** (2006.01)

(52) Classification Coopérative des Brevets (CPC):
(C-Sets disponibles)
**C10L 1/1973; C08F 210/02; C10L 10/14;**
C08F 2438/03; C10L 1/1641; C10L 2200/0446;
C10L 2270/026 (Cont.)

(86) Numéro de dépôt international:
**PCT/FR2021/051266**

(87) Numéro de publication internationale:
**WO 2022/023636 (03.02.2022 Gazette 2022/05)**

# (54) UTILISATION DE COPOLYMÈRES À DISTRIBUTION DE MASSE MOLAIRE SPÉCIFIQUE POUR ABAISSER LA TEMPÉRATURE LIMITE DE FILTRABILITÉ DE CARBURANTS OU DE COMBUSTIBLES

VERWENDUNG VON COPOLYMEREN MIT SPEZIFISCHER MOLMASSENVERTEILUNG ZUR SENKUNG DES KALTFILTER-STOPFENPUNKTES VON KRAFTSTOFFEN

USE OF COPOLYMERS HAVING A SPECIFIC MOLAR MASS DISTRIBUTION FOR LOWERING THE COLD FILTER PLUGGING POINT OF FUELS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.07.2020 FR 2008192**

(43) Date de publication de la demande:
**07.06.2023 Bulletin 2023/23**

(73) Titulaires:
- **TOTALENERGIES ONETECH**
  **92400 Courbevoie (FR)**
- **CENTRE NATIONAL DE LA RECHERCHE SCIENTIFIQUE (CNRS)**
  **75016 Paris (FR)**
- **UNIVERSITE CLAUDE BERNARD - LYON 1**
  **69100 Villeurbanne (FR)**
- **CPE Lyon Formation Continue et Recherche - CPE Lyon FCR**
  **69100 Villeurbanne (FR)**

(72) Inventeurs:
- **CENACCHI-PEREIRA, Ana-Maria**
  **69360 SOLAIZE CEDEX (FR)**
- **D'AGOSTO, Franck**
  **69740 GENAS (FR)**
- **MONTEIL, Vincent**
  **69008 LYON (FR)**
- **WOLPERS, Arne**
  **31134 HILDESHEIM (DE)**

(74) Mandataire: **Casalonga**
**Casalonga & Partners**
**Bayerstraße 71/73**
**80335 München (DE)**

(56) Documents cités:
**WO-A1-2020/141126**
**US-A- 5 743 923**
**US-A1- 2004 226 216**
**US-A1- 2005 183 326**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC): (Cont.)

C-Sets
**C08F 210/02, C08F 4/04;**
C08F 210/02, C08F 218/08, C08F 2500/02, C08F 2500/03, C08F 2500/27

**Description**

La présente invention concerne l'utilisation de copolymères particuliers pour abaisser la température limite de filtrabilité des carburants et des combustibles lors de leur stockage et/ou leur utilisation à basse température.
La présente invention concerne également des compositions d'additifs (ou « packages d'additifs ») comprenant ces copolymères, ainsi que des compositions de carburant et de combustible additivées avec de tels copolymères.

**ETAT DE L'ART ANTERIEUR**

Les carburants ou combustibles contenant des composés paraffiniques, notamment des composés contenant des groupements n-alkyle, iso-alkyle ou n-alcényle telles que des cires paraffiniques, sont connus pour présenter des propriétés d'écoulement détériorées à basse température, typiquement en dessous de 0°C. En particulier, on sait que les distillats moyens obtenus par distillation à partir d'huiles brutes d'origine pétrolière comme le gazole ou le fioul domestique, contiennent différentes quantités de n-alcanes ou n-paraffines selon leur provenance. Ces composés ont tendance à cristalliser à basse température, bouchant les tuyaux, canalisations, pompes et filtres, par exemple dans les circuits du carburant des véhicules automobiles. En hiver ou dans des conditions d'utilisation des carburants ou combustibles à température inférieure à 0°C, le phénomène de cristallisation de ces composés peut conduire à la diminution des propriétés d'écoulement des carburants ou combustibles et, par conséquent engendrer des difficultés lors de leur transport, de leur stockage et/ou de leur utilisation. L'opérabilité à froid des carburants ou combustibles est une propriété très importante, notamment pour assurer le démarrage des moteurs à froid. Si des paraffines sont cristallisées au fond du réservoir, elles peuvent être entraînées au démarrage dans le circuit de carburant et colmater notamment les filtres et préfiltres disposés en amont des systèmes d'injection (pompe et injecteurs). De même, pour le stockage des fiouls domestiques, si des paraffines précipitent en fond de cuve, elles peuvent être entraînées et obstruer les conduites en amont de la pompe et du système d'alimentation de la chaudière (gicleur et filtre).
Ces problèmes sont bien connus dans le domaine des carburants et combustibles, et de nombreux additifs ou mélanges d'additifs ont été proposés et commercialisés pour réduire la taille des cristaux de paraffines et/ou changer leur forme et/ou les empêcher de se former. Une taille de cristaux la plus faible possible est préférée car elle minimise les risques de bouchage ou de colmatage des filtres.
Les agents d'amélioration d'écoulement habituels dits fluidifiants à froid (en anglais « cold flow improvers » ou CFI) sont en général des co- et ter-polymères d'éthylène et d'ester(s) vinylique(s) et/ou acrylique(s), employés seuls ou en mélange. Ces additifs fluidifiants à froid (CFI), destinés à abaisser la Température Limite de Filtrabilité (TLF), inhibent la croissance des cristaux à basse température en favorisant la dispersion des cristaux de paraffine ; ce sont par exemple les polymères d'éthylène et d'acétate de vinyle et/ou de propionate de vinyle (EVA ou EVP), aussi communément appelés additifs de TLF. Ce type d'additifs, très largement connu de l'homme du métier, est systématiquement ajouté aux distillats moyens classiques en sortie de raffinerie. Ces distillats additivés sont utilisés comme carburant pour moteur Diesel ou comme combustible de chauffage. Des quantités supplémentaires de ces additifs peuvent être ajoutées aux carburants vendus en stations-service notamment pour satisfaire les spécifications dites Grand Froid. WO 2020/141126 A1 décrit l'utilisation de copolymères spécifiques, formés de monomères éthylène et esters vinyliques et ayant une masse molaire moyenne en nombre Mn comprise entre 3.000 et 7.000 g/mol, pour abaisser la température limite de filtrabilité des carburants et des combustibles.
Du fait de la diversification des sources de carburants et de combustibles, il existe toujours un besoin de trouver de nouveaux additifs pour abaisser la température limite de filtrabilité des carburants ou combustibles.
Ce besoin est particulièrement important pour les carburants ou combustibles comprenant un ou plusieurs composés paraffiniques, par exemple des composés contenant des groupements n-alkyle, iso-alkyle ou n-alcényle présentant une tendance accrue à la cristallisation à basse température.
Notamment, les distillats utilisés dans les carburants et combustibles sont de plus en plus issus d'opérations de raffinage plus complexes que ceux issus de la distillation directe du pétrole, et peuvent provenir notamment des procédés de craquage, d'hydrocraquage, de craquage catalytique et des procédés de viscoréduction. Avec la demande croissante en carburants Diesel, le raffineur a tendance à introduire dans ces carburants des coupes plus difficilement exploitables, comme les coupes les plus lourdes issues des procédés de craquage et de viscoréduction qui sont riches en paraffines à longues chaînes.
En outre, des distillats synthétiques issus de la transformation du gaz tels que ceux issus du procédé Fischer Tropsch, ainsi que des distillats résultant du traitement de biomasses d'origine végétale ou animale, comme notamment le NexBTL et des distillats comprenant des ester d'huiles végétales ou animales sont apparus sur le marché, et constituent une nouvelle gamme de produits utilisables comme base pour formuler des carburants et ou des fiouls domestiques. Ces produits comprennent également des hydrocarbures à chaînes paraffiniques longues.
De plus, on a constaté l'arrivée de nouveaux pétroles bruts sur le marché, beaucoup plus riches en paraffines que ceux communément raffinés, et dont la température de filtrabilité des distillats issus de distillation directe était

difficilement améliorée par les additifs de filtrabilité classiques au même titre que ceux précédemment cités.

On a constaté que les propriétés de tenue à froid des distillats obtenus par combinaison des anciennes bases et de ces nouvelles sources était difficilement améliorée par l'ajout d'additifs classiques de filtrabilité, entre autres du fait de la présence importante de paraffines à longue chaîne et de la distribution complexe en paraffines dans leur composition. On a pu noter en effet dans ces nouvelles combinaisons de distillats, des distributions discontinues en paraffines, en présence desquelles les additifs de filtrabilité connus ne sont pas toujours suffisamment efficaces.

Il existe donc un besoin d'adapter les additifs de tenue à froid à ces nouveaux types de bases pour carburants et combustibles, considérés comme particulièrement difficiles à traiter.

La présente invention s'applique aux carburants et combustibles contenant non seulement des distillats classiques tels que ceux issus de la distillation directe des pétroles bruts, mais également aux bases issues d'autres sources, telles que celles décrites ci-avant.

Ainsi, le but de la présente invention est de proposer de nouveaux additifs et des concentrés les contenant qui peuvent avantageusement être utilisés comme additifs pour améliorer la tenue à froid des carburants ou combustibles, lors de leur stockage et/ou leur utilisation à basse température, typiquement inférieure à 0°C.

Le but de la présente invention est en particulier de proposer de nouveaux additifs pour carburants et combustibles, et des concentrés contenant de tels additifs, qui permettent de diminuer la Température Limite de Filtrabilité (TLF).

Enfin, un autre objet de l'invention est de proposer une composition de carburant ou de combustible ayant une tenue à froid améliorée, en particulier à des températures inférieures à 0°C, de préférence inférieures à -5°C.

## OBJET DE L'INVENTION

La demanderesse a découvert que l'efficacité des copolymères d'éthylène et d'acétate de vinyle et/ou de propionate de vinyle (copolymères dits EVA ou EVP) classiquement employés comme additifs de tenue à froid n'était pas toujours satisfaisante, notamment pour traiter des bases de carburant ou de combustibles difficiles à traiter, et que la distribution des masses molaires de ce type de copolymères avait un impact important et inattendu sur leurs performances.

Elle a en particulier découvert que certains copolymères, qui présentent des teneurs particulières en monomères et des caractéristiques spécifiques en termes de masse molaire et de dispersité, présentaient de manière inattendue des performances supérieures pour améliorer la tenue à froid des carburants et des combustibles, notamment pour en diminuer la température limite de filtrabilité, y compris pour des compositions qui sont particulièrement difficiles à traiter.

La présente invention a ainsi pour objet l'utilisation, pour diminuer la température limite de filtrabilité d'une composition de carburant ou de combustible, d'un ou plusieurs copolymère(s) formé(s) des motifs suivants :

- de 75 à 95% en moles d'un motif de formule (I) suivante :

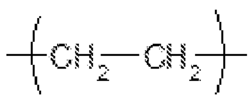

(I)

et

- de 5 à 25% en moles d'un ou plusieurs motif(s) de formule (II) suivante :

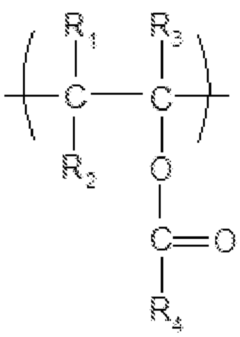

(II)

dans laquelle

$R_1$, $R_2$, et $R_3$, identiques ou différents, représentent un atome d'hydrogène ou un groupe alkyle en $C_1$ à $C_4$, et $R_4$ représente un groupe alkyle en $C_1$ à $C_{11}$,
ledit copolymère ayant une masse molaire au pic Mp comprise dans la gamme allant de 4000 à 7000 $g.mol^{-1}$, et une dispersité inférieure ou égale à 1,8.

De manière connue en soi, la température limite de filtrabilité d'une composition de carburant ou de combustible est mesurée conformément à la norme NF EN 116.
De manière également connue, la masse molaire au pic Mp et la dispersité sont déterminées par chromatographie d'exclusion stérique.
L'invention a également pour objet une composition d'additifs comprenant un tel copolymère en association avec au moins un autre additif de tenue à froid différent des copolymères selon l'invention, ainsi qu'un concentré d'additifs contenant une telle composition.
L'invention a également pour objet une composition de carburant ou de combustible, comprenant :

- au moins une coupe d'hydrocarbures issue d'une ou de plusieurs sources choisies parmi le groupe consistant en les sources minérales (de préférence le pétrole), animales, végétales et synthétiques, et
- au moins un copolymère tel que défini ci-avant.

Selon un mode de réalisation, cette composition comprend en outre au moins un autre additif de tenue à froid différent des copolymères selon l'invention définis ci-avant.
D'autres objets, caractéristiques, aspects et avantages de l'invention apparaîtront encore plus clairement à la lecture de la description et des exemples qui suivent.
Dans ce qui va suivre, et à moins d'une autre indication, les bornes d'un domaine de valeurs sont comprises dans ce domaine, notamment dans les expressions « compris entre » et « allant de ... à ... ».
Par ailleurs, les expressions « au moins un » et « au moins » utilisées dans la présente description sont respectivement équivalentes aux expressions « un ou plusieurs » et « supérieur ou égal ».
Enfin, de manière connue en soi, on désigne par composé ou groupe en $C_N$ un composé ou un groupe contenant dans sa structure chimique N atomes de carbone.

**DESCRIPTION DETAILLEE**

Le copolymère :

L'invention met en oeuvre un copolymère comprenant un motif répétitif de formule (I) suivante :

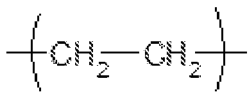

(I)

Ce motif est issu du monomère éthylène.
Il représente de 75 à 95% en moles, par rapport au nombre de moles total de motifs du copolymère.
De préférence, le copolymère comprend de 77 à 92% en moles de motifs de formule (I), plus préférentiellement de 80 à 88% en moles, et mieux encore de 82 à 87% en moles.
Le copolymère employé dans la présente invention comprend également un ou plusieurs motif(s) répétitif(s) répondant à la formule (II) suivante :

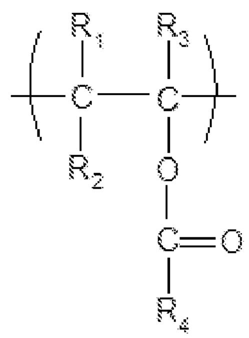

(II)

dans laquelle
$R_1$, $R_2$, et $R_3$, identiques ou différents, représentent un atome d'hydrogène ou un groupe alkyle en $C_1$ à $C_4$, et $R_4$ représente un groupe alkyle en $C_1$ à $C_{11}$.

Selon un mode de réalisation préféré, $R_1$, $R_2$, et $R_3$, identiques ou différents, représentent un atome d'hydrogène ou un groupe méthyle. De manière particulièrement préférée, $R_1$, $R_2$, et $R_3$ représentent tous un atome d'hydrogène.

Selon un mode de réalisation également préféré, $R_4$ représente un groupe alkyle linéaire. Plus préférentiellement, $R_4$ est choisi parmi les groupes méthyle, éthyle, n-pentyle et n-undécyle (n-$C_{11}H_{23}$), et plus préférentiellement encore $R_4$ est un groupe méthyle.

Selon un mode de réalisation particulièrement préféré :

- $R_1$, $R_2$, et $R_3$ représentent tous un atome d'hydrogène, et
- $R_4$ est choisi parmi les groupes méthyle, éthyle, n-pentyle et n-undécyle (n-$C_{11}H_{23}$), et de préférence un groupe méthyle.

Le ou les motifs de formule (II) représente(nt) de 5 à 25% en moles, par rapport au nombre de moles total de motifs du copolymère.

De préférence, le copolymère comprend de 8 à 23% en moles de motifs de formule (II), plus préférentiellement de 12 à 20% en moles et mieux encore de 13 à 18% en moles.

Les motifs de formule (II) sont avantageusement issus de monomères choisis parmi les esters d'acide carboxylique en $C_1$ à $C_{12}$ et d'alcools vinyliques, c'est-à-dire les esters vinyliques de formule (IIA) suivante :

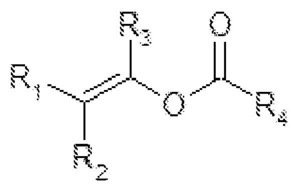

(IIA)

dans laquelle $R_1$, $R_2$, $R_3$ et $R_4$ sont tels que définis ci-avant.

Des monomères particulièrement préférés sont l'acétate de vinyle, le propionate de vinyle, l'hexanoate de vinyle et le laurate de vinyle, et plus préférentiellement encore l'acétate de vinyle.

Le copolymère selon l'invention est avantageusement choisi parmi les copolymères de l'éthylène et d'un ou plusieurs ester(s) d'acide carboxylique en $C_1$ à $C_{12}$ et d'alcool vinylique (éthénol). Des copolymères particulièrement préférés sont : les copolymères d'éthylène et d'acétate de vinyle ; les copolymères d'éthylène et de propionate de vinyle ; les terpolymères d'éthylène, d'acétate de vinyle et de propionate de vinyle ; les copolymères d'éthylène et d'hexanoate de vinyle ; les copolymères d'éthylène et de laurate de vinyle ; et les mélanges de ces copolymères ; et plus préférentiellement encore parmi les copolymères d'éthylène et d'acétate de vinyle.

La masse molaire au pic (Mp) des copolymères selon l'invention est comprise dans la gamme allant de 4000 à 7000 $g.mol^{-1}$, de préférence de 4200 à 6500 $g.mol^{-1}$, mieux de 4300 à 6000 $g.mol^{-1}$, et mieux encore de 4300 à 5000 $g.mol^{-1}$.

Le copolymère selon l'invention présente une dispersité inférieure ou égale à 1,8. Selon un mode de réalisation préféré, le copolymère présente une dispersité comprise dans la gamme allant de 1 à 1,8 ; de préférence de 1,1 à 1,7 ; et plus préférentiellement de 1,3 à 1,6.

De manière bien connue en soi, la dispersité D correspond au rapport entre la masse molaire moyenne en

masse ($M_w$) et la masse molaire moyenne en nombre ($M_n$) du copolymère, selon l'équation :

$$D = M_w : M_n.$$

Ce coefficient est représentatif de la largeur de distribution des masses molaires du copolymère, lequel se présente comme une population de macromolécules ayant des longueurs de chaînes variables.

La population présente en plus grande quantité en nombre correspond à celle représentée par la masse molaire au pic (Mp).

De manière également connue en soi, les masses molaires moyennes en nombre ($M_n$) et en masse ($M_w$), ainsi que la masse molaire au pic (Mp) et la dispersité *D* sont déterminées au moyen de la technique de chromatographie d'exclusion stérique (SEC en anglais «Size Exclusion Chromatography »). La détection peut être effectuée par indice de réfraction (RI).

Le copolymère employé dans la présente invention est de préférence un copolymère statistique.

Le copolymère employé dans la présente invention contient uniquement des motifs de formule (I) et des motifs de formule (II).

Le copolymère employé dans la présente invention est avantageusement obtenu par copolymérisation de l'éthylène avec un ou plusieurs monomères choisis parmi les esters vinyliques de formule (IIA) telle que définie ci-avant.

Il est toutefois entendu que l'on ne sortirait pas de l'invention si l'on obtenait le polymère selon l'invention à partir de monomères différents, dans la mesure où le copolymère final correspond à un polymère comprenant des motifs de formule (I) et des motifs de formule (II) tels que définis ci-avant. Par exemple, on ne sortirait pas de l'invention, si l'on obtenait le polymère par polymérisation de monomères différents, suivie d'une post-fonctionnalisation.

Les copolymères selon l'invention peuvent être préparés selon des procédés de polymérisation connus en soi. Les différentes techniques et conditions de polymérisation sont largement décrites dans la littérature et relèvent des connaissances générales de l'homme de l'art.

Ils peuvent notamment être synthétisés par polymérisation radicalaire classique : on procède généralement par mélange des différents monomères dans un solvant approprié, et la copolymérisation est amorcée au moyen d'un agent amorceur de polymérisation radicalaire.

Dans le cas où le copolymère est préparé par polymérisation radicalaire classique, il peut être nécessaire de procéder après la polymérisation proprement dite à une purification par toute technique de séparation appropriée (notamment par chromatographie) de manière à isoler un copolymère ayant les caractéristiques requises en termes de masse molaire et de dispersité.

Selon un mode de réalisation préféré, le copolymère selon l'invention est préparé en utilisant les techniques polymérisations radicalaires contrôlées (PRC). Les techniques de polymérisation radicalaire contrôlée, connues en soi, présentent l'avantage de pouvoir conduire directement à des copolymères ayant les caractéristiques de masse molaire et de dispersité requises, de telle sorte qu'une purification séparative peut, selon les conditions utilisées, ne pas être nécessaire.

Parmi ces techniques, on peut citer notamment les polymérisations gouvernées par terminaison réversible ou par transfert réversible (ou transfert dégénératif, en anglais « degenerative transfer»). Parmi ces techniques PRC, celles contrôlées par transfert dégénératif sont préférées et parmi celles-ci la polymérisation radicalaire par transfert de chaîne réversible par addition-fragmentation (RAFT en anglais « Réversible Addition-Fragmentation Chain Transfer ») est encore plus préférée.

L'utilisation :

Le copolymère décrit ci-avant est utilisé pour améliorer la température limite de filtrabilité d'une composition de carburant ou de combustible, en particulier d'une composition choisie parmi les gazoles, les biodiesels, les gazoles de type $B_x$ tels que définis ci-après et les fiouls tels que notamment les fiouls domestiques (FOD).

La température limite de filtrabilité, ou TLF, est mesurée selon la norme NF EN 116.

La composition de carburant ou de combustible est telle que décrite ci-après et comprend avantageusement au moins une coupe d'hydrocarbures issue d'une ou de plusieurs sources choisies parmi le groupe consistant en les sources minérales, de préférence le pétrole, les sources animales, végétales et synthétiques.

Le copolymère peut être ajouté dans les carburants ou combustibles au sein de la raffinerie, et/ou être incorporé en aval de la raffinerie, éventuellement en mélange avec d'autres additifs sous forme d'un concentré d'additif, encore appelé selon l'usage « package d'additifs ».

Le copolymère est avantageusement utilisé dans le carburant ou combustible à une teneur d'au moins 0,0005% en poids, par rapport au poids total de la composition de carburant ou de combustible.

De préférence, la teneur dudit copolymère va de 0,001 à 0,2% en poids, de préférence de 0,005 à 0,1% en

poids, et mieux encore de 0,01 à 0,04% en poids, par rapport au poids total de la composition de carburant ou de combustible.

La composition d'additifs :

L'invention a également pour objet une composition d'additifs comprenant un ou plusieurs copolymère(s) selon l'invention, tel(s) que décrit(s) ci-avant, et un ou plusieurs additif(s) de tenue à froid différent(s) des copolymères constitués de motifs de formule (I) et de motifs de formule (II) ayant une masse molaire au pic Mp comprise dans la gamme allant de 4000 à 7000 $g.mol^{-1}$ et une dispersité inférieure ou égale à 1,8, tels que décrits ci-avant.

Le ou les additif(s) de tenue à froid peuvent être en particulier choisis parmi les additifs d'anti-sédimentation et/ou dispersants de paraffines, les additifs boosters de TLF, les additifs améliorant les propriétés d'écoulement à froid (CFI) différent(s) des copolymères constitués des motifs de formule (I) et de formule (II) présentant les Mp et indice de dispersité tels que décrits ci-avant, et les mélanges de ces additifs.

Le ou les additif(s) anti-sédimentation et/ou dispersant de paraffines (WASA) peuvent être notamment, mais non limitativement, choisis dans le groupe constitué par les copolymères acide (méth)acrylique/(méth)acrylate d'alkyle amidifiés par une polyamine, les produits de condensation d'un ou plusieurs acides carboxyliques avec une ou plusieurs polyamines, les alkénylsuccinimides de polyamine, les dérivés d'acide phtalamique et d'amine grasse à double chaîne, les résines alkylphénol éventuellement greffées, les résines alkylphénol-aldéhydes modifiées. Des exemples de tels additifs sont donnés dans les documents suivants : EP261959, EP593331, EP674689, EP327423, EP512889, EP832172 ; US2005/0223631 ; US5998530 ; WO93/14178 ; WO2012/085865.

Les additifs anti-sédimentation et/ou dispersants de paraffines (WASA) particulièrement préférés sont choisis parmi les résines alkylphénol et les résines alkylphénol greffées par exemple par des groupes fonctionnels tels que des polyamines.

Les additifs dits « boosters de TLF » ont pour fonction d'agir en combinaison avec les additifs de TLF de manière à en augmenter l'efficacité, et sont généralement présents en quantité très inférieure à celle du ou des additif(s) de TLF. L'art antérieur décrit abondamment de tels boosters.

Les additifs améliorant les propriétés d'écoulement à froid (CFI) différent(s) des copolymères constitués des motifs de formule (I) et de motifs de formule (II) présentant les Mp et indice de dispersité selon l'invention préférés sont de préférence choisis parmi les terpolymères d'éthylène, d'acétate de vinyle et d'un troisième monomère choisi parmi les acrylates ou les esters vinyliques. Des exemples de tels additifs sont données dans les documents suivants : EP1881053 ; EP1881055 ; US20110271586 ; WO2011001352.

La composition d'additifs peut avantageusement comprendre de 40 à 90% en poids de copolymère(s) selon l'invention, de préférence de 50 à 80% en poids, plus préférentiellement de 60 à 70% en poids par rapport au poids total de la composition d'additifs.

La composition d'additifs peut avantageusement comprendre en outre de 1 à 50% en poids d'additif(s) anti-sédimentation et/ou dispersant(s) de paraffines tel(s) que décrit(s) précédemment, de préférence de 2 à 30% en poids, plus préférentiellement de 5 à 20% en poids, par rapport au poids total de la composition d'additifs.

La composition d'additifs peut avantageusement comprendre en outre de 0,1 à 15% en poids d'additif(s) booster(s) de TLF, de préférence de 0,5 à 10% en poids, plus préférentiellement de 0,6 à 5% en poids, par rapport au poids total de la composition d'additifs.

La composition d'additifs peut également comprendre un ou plusieurs autres additifs couramment utilisés dans les carburants et les combustibles, différents des copolymères selon l'invention et des additifs de tenue à froid décrits précédemment.

La composition d'additifs peut, typiquement, comprendre un ou plusieurs autres additifs choisis parmi les détergents, les agents anti-corrosion, les dispersants, les désémulsifiants, les biocides, les réodorants, les additifs procétane, les modificateurs de friction, les additifs de lubrifiance ou additifs d'onctuosité, les agents d'aide à la combustion (promoteurs catalytiques de combustion de suie), les agents anti-usure et/ou les agents modifiant la conductivité.

Parmi ces additifs, on peut citer en particulier :

a) les additifs procétane, notamment (mais non limitativement) choisis parmi les nitrates d'alkyle, de préférence le nitrate de 2-éthyl hexyle, les peroxydes d'aryle, de préférence le peroxyde de benzyle, et les peroxydes d'alkyle, de préférence le peroxyde de ter-butyle;

b) les additifs anti-mousse, notamment (mais non limitativement) choisis parmi les polysiloxanes, les polysiloxanes oxyalkylés, et les amides d'acides gras issus d'huiles végétales ou animales. Des exemples de tels additifs sont donnés dans EP861882, EP663000, EP736590 ;

c) les additifs détergents et/ou anti-corrosion, notamment (mais non limitativement) choisis dans le groupe constitué par les amines, les succinimides, les alkénylsuccinimides, les polyalkylamines, les polyalkyles polyamines, les polyétheramines, les sels d'ammonium quaternaire et les dérivés du triazole ; des exemples de tels additifs sont

donnés dans les documents suivants : EP0938535, US2012/0010112 et WO2012/004300. On peut également avantageusement employer les copolymères blocs formés d'au moins un motif polaire et un motif apolaire, tels que par exemple ceux décrits dans la demande de brevet FR 1761700 au nom de la Demanderesse ;

d) les additifs de lubrifiance ou agents anti-usure, notamment (mais non limitativement) choisis dans le groupe constitué par les acides gras et leurs dérivés ester ou amide, notamment le monooléate de glycérol, et les dérivés d'acides carboxyliques mono- et polycycliques. Des exemples de tels additifs sont donnés dans les documents suivants: EP680506, EP860494, WO98/04656, EP915944, FR2772783, FR2772784.

La présente invention a également pour objet un concentré d'additifs comprenant une composition d'additifs telle que décrite ci-avant, en mélange avec un liquide organique. Le liquide organique est avantageusement inerte vis-à-vis des constituants de la composition d'additifs, et miscible aux carburants et combustibles, notamment ceux issus d'une ou de plusieurs sources choisies parmi le groupe consistant en les sources minérale, de préférence le pétrole, animale, végétale et synthétique.

Le liquide organique est de préférence choisi parmi les solvants hydrocarbonés aromatiques tels que le solvant commercialisé sous le nom « SOLVESSO », les alcools, les éthers et autres composés oxygénés, et les solvants paraffiniques tels que l'hexane, pentane ou les isoparaffines, seuls ou en mélange.

La composition de carburant ou de combustible :

L'invention concerne également une composition de carburant ou de combustible, comprenant :

- au moins une coupe d'hydrocarbures issue d'une ou de plusieurs sources choisies parmi le groupe consistant en les sources minérales, animales, végétales et synthétiques, et
- au moins un copolymère tel que défini ci-avant.

Les sources minérales sont de préférence le pétrole.

La composition de carburant ou de combustible selon l'invention comprend avantageusement ledit ou lesdits copolymère(s) en une teneur d'au moins 0,0005% en poids, par rapport au poids total de la composition de carburant ou de combustible. De préférence, la teneur en copolymère(s) va de 0,001 à 0,2% en poids, de préférence de 0,005 à 0,1% en poids, et mieux encore de 0,01 à 0,04% en poids, par rapport au poids total de la composition de carburant ou de combustible.

Selon un mode de réalisation préféré, ladite composition comprend en outre au moins un additif de tenue à froid différent des copolymères selon l'invention constitués des motifs de formule (I) et des motifs de formule (II) tels que décrits ci-avant, choisi parmi les additifs améliorant des propriétés d'écoulement à froid (CFI) différent(s) des copolymères selon l'invention, les additifs anti-sédimentation et/ou dispersants de paraffines (WASA), et/ou les additifs boosters de TLF. De tels additifs sont avantageusement choisis parmi ceux décrits ci-avant.

Dans ce mode de réalisation, la composition de carburant ou de combustible comprend avantageusement l'additif ou les additifs améliorant des propriétés d'écoulement à froid différents des copolymères selon l'invention et/ou les additifs anti-sédimentation et/ou dispersant(s) de paraffines et/ou les additifs boosters de TLF en une teneur allant (pour chaque additif) de 0,0001 à 0,1% en poids, de préférence de 0,0005 à 0,05% en poids, plus préférentiellement de 0,001 à 0,02% en poids, par rapport au poids total de la composition de carburant ou de combustible.

Les carburants ou combustibles peuvent être choisis parmi les carburants ou combustibles hydrocarbonés liquides, seuls ou en mélange. Les carburants ou combustibles hydrocarbonés liquides comprennent notamment des distillats moyens de température d'ébullition comprise entre 100 et 500°C. Ces distillats peuvent par exemple être choisis parmi les distillats obtenus par distillation directe d'hydrocarbures bruts, les distillats sous vide, les distillats hydrotraités, les distillats issus du craquage catalytique et/ou de l'hydrocraquage de distillats sous vide, les distillats résultant de procédés de conversion type ARDS (par désulfuration de résidu atmosphérique) et/ou de viscoréduction, les distillats issus de la valorisation des coupes Fischer Tropsch, les distillats résultant de la conversion BTL (biomass to liquid) de la biomasse végétale et/ou animale, prise seule ou en combinaison, et/ou les biodiesels d'origine animale et/ou végétale et/ou les huiles et/ou esters d'huiles végétales et/ou animales.

La teneur en soufre des carburants ou combustibles est, de préférence, inférieure à 5000 ppm, de préférence inférieure à 500 ppm, et plus préférentiellement inférieure à 50 ppm, voire même inférieure à 10 ppm, et avantageusement sans soufre.

Le carburant ou combustible est, de préférence, choisi parmi les gazoles, les biodiesels, les gazoles de type $B_x$ et les fiouls tels que notamment les fiouls domestiques (FOD).

On entend par gazole de type $B_x$ pour moteur Diesel (moteur à compression), un carburant gazole qui contient x% (v/v) d'esters d'acides gras ou d'huiles végétales ou animale (y compris huiles de cuisson usagées) transformés par un procédé chimique appelé transestérification faisant réagir cette huile avec un alcool afin d'obtenir des esters d'acide

gras (EAG). Avec le méthanol et l'éthanol, on obtient respectivement des esters méthyliques d'acides gras (EMAG) et des esters éthyliques d'acides gras (EEAG). La lettre "B" est suivie par un nombre x allant de 0 à 100, qui indique le pourcentage d'EAG contenu dans le gazole. Ainsi, un B99 contient 99% de EAG et 1% de distillats moyens d'origine fossile, le B20, 20% de EAG et 80% de distillats moyens d'origine fossile etc... On distingue donc les carburants gazoles de type $B_0$ qui ne contiennent pas d'esters d'acide gras, des carburants gazoles de type Bx qui contiennent x% (v/v) d'esters d'huiles végétales ou animales ou d'acides gras, le plus souvent esters méthyliques (EMHV ou EMAG). Lorsque l'EAG est utilisé seul dans les moteurs, on désigne le carburant par le terme B100.

Le carburant ou combustible peut également contenir des huiles végétales hydrotraitées, connues de l'homme du métier sous l'appellation HVO (de l'anglais « hydrotreated vegetable oil ») ou HDRD (de l'anglais « hydrogenation-derived renewable diesel »).

Selon un mode de réalisation préféré, le carburant ou combustible est choisi parmi les gazoles, les biodiesels et les gazoles de type $B_x$, les huiles végétales hydrotraitées (HVO), et leurs mélanges.

La composition de carburant ou combustible peut également contenir un ou plusieurs additifs additionnels, différents des copolymères et des additifs de tenue à froid décrits ci-avant. De tels additifs peuvent être notamment choisis parmi les détergents, les agents anti-corrosion, les dispersants, les désémulsifiants, les agents anti-mousse, les biocides, les réodorants, les additifs procétane, les modificateurs de friction, les additifs de lubrifiance ou additifs d'onctuosité, les agents d'aide à la combustion (promoteurs catalytiques de combustion de suie), les agents anti-usure et/ou les agents modifiant la conductivité. Des additifs particulièrement préférés sont ceux décrits ci-avant en ce qui concerne la composition d'additifs selon l'invention.

Ces additifs additionnels peuvent être en général présents en quantité allant de 50 à 1000 ppm (chacun).

Selon un autre mode de réalisation de l'invention, un procédé pour abaisser la température limite de filtrabilité d'une composition de carburant ou de combustible comprend une étape de traitement de ladite composition avec au moins un copolymère tel que décrit ci-avant.

Selon un mode de réalisation, ce procédé comprend les étapes successives de :

a) détermination d'une composition d'additif(s) la plus adaptée à la composition de carburant ou combustible à traiter ainsi que de la quantité (ie du taux de traitement) nécessaire pour atteindre une valeur maximale de température limite de filtrabilité pour la composition de carburant ou combustible spécifique, ladite composition d'additif(s) comprenant au moins un copolymère selon l'invention et, en option, au moins un additif de tenue à froid différent des copolymères selon l'invention, choisi parmi les additifs améliorant des propriétés d'écoulement à froid et/ou les additifs anti-sédimentation et/ou dispersants de paraffines et les additifs boosters de TLF;

b) traitement de la composition de carburant ou combustible avec la quantité déterminée à l'étape a) de ladite composition d'additif(s).

Le procédé selon l'invention est typiquement destiné à une composition de carburant ou combustible telle que décrite ci-avant.

L'étape a) est réalisée selon tout procédé connu et relève de la pratique courante dans le domaine de l'additivation des carburants ou combustibles. Cette étape implique de définir une valeur cible puis de déterminer l'amélioration qui est requise pour atteindre cette valeur.

La valeur de TLF maximale est définie en référence à la norme NF EN 116. La détermination de la quantité de composition d'additif(s) à ajouter à la composition de carburant ou combustible pour atteindre la valeur cible sera réalisée typiquement par comparaison avec la composition de carburant ou combustible sans ladite composition d'additif(s).

La quantité de copolymère nécessaire pour traiter la composition de carburant ou de combustible peut varier en fonction de la nature et de l'origine du carburant ou combustible, en particulier en fonction du taux et de la nature des composés paraffiniques qu'il contient. La nature et l'origine du carburant ou combustible peut donc être également un facteur à prendre en compte pour l'étape a).

Le procédé ci-avant peut également comprendre une étape supplémentaire après l'étape b) de vérification de la cible atteinte et/ou d'ajustement du taux de traitement avec la composition d'additif(s).

Les exemples ci-après sont donnés à titre d'illustration de l'invention, et ne sauraient être interprétés de manière à en limiter la portée.

## EXEMPLES

Exemple 1 : Synthèse de différents polymères

Composés de départ :

Le carbonate de diméthyle (DMC) est fourni par Sigma-Aldrich (99%). Il est dégazé par bullage d'argon continu.

Le N,N'-azobis(isobutyronitrile) (AIBN, Sigma-Aldrich, 98%) est utilisé directement sans purification.
L'acétate de vinyle (Sigma-Aldrich, ≥99%) a été purifié par une colonne d'alumine basique. Il est conservé sous argon.
L'éthylène (99,995%) est fourni par Air Liquide. Il est utilisé sans purification supplémentaire.
Le 2-(4-Méthoxyphénoxycarbonothiolthio)acétate de méthyle.
Le diphénylcarbamodithioate de cyanométhyle (Sigma-Aldrich, 97%) est utilisé directement sans purification.

Aperçu des copolymères statistiques d'éthylène et d'acétate de vinyle synthétisés :

[Table 1]

| Copolymère | Mn en $g.mol^{-1}$ | Dispersité *D* | Mp en g.mol-1 | Teneur en acétate de vinyle en % molaire |
|---|---|---|---|---|
| EVA1 invention | 3700 | 1,59 | 6000 | 13,7 |
| EVA2 invention | 3500 | 1,37 | 4700 | 13,5 |
| EVA3 comparatif | 2200 | 1,50 | 3200 | 14,5 |
| EVA4 comparatif | 7300 | 1,45 | 11 000 | 14,3 |
| EVA5 comparatif | 1700 | 2,4 | 4400 | 16,5 |

Généralités :

Les copolymérisations de l'éthylène sont réalisées dans un réacteur en acier inoxydable de la société Parr Instrument Co., équipé d'une pâle d'agitation, d'un four électrique, d'un sas d'injection, de capteurs de pression et de température, ainsi que d'une soupape de sécurité (disque de rupture, 340 bar). La pression d'éthylène maximale de travail est 250 bar. Le réacteur est fermé hermétiquement à l'aide de deux mors en acier. Afin de pouvoir atteindre des pressions élevées en éthylène, est utilisé un ballast intermédiaire d' 1,5 L. Il est équipé d'une soupape de sécurité (disque de rupture, 340 bar). Le remplissage du ballast est réalisé par liquéfaction de l'éthylène à -20 °C à une pression de 42 bar d'éthylène. Une fois l'équilibre atteint, le ballast est ramené à température ambiante. La pression du ballast, à 20 °C, est d'environ 220 bar. Suivant les conditions de polymérisation, le ballast est chauffé afin d'atteindre une différence de pression suffisante ($\Delta P > 100$ bar) par rapport à la pression de départ de 220°C. Pour les copolymérisations à 75 bar, le ballast est maintenu à température ambiante.

Protocole de synthèse du copolymère EVA1, selon l'invention:

L'AIBN (50 mg), le 2-(4-méthoxyphénoxycarbonothiolthio)acétate de méthyle (250 mg) et l'acétate de vinyle (7,5 mL) sont introduits dans un Schlenk sous argon qui est finalement complété avec du DMC jusqu'à 50 mL (42,5 mL DMC). Les composés conservés à froid ne sont prélevés qu'une fois revenus à température ambiante.

Le réacteur est également conditionné par trois cycles vide-argon à chaud. La température du réacteur doit être inférieure de 2°C à la température de polymérisation (80°C), afin d'assurer une stabilisation rapide de la température une fois le mélange réactionnel introduit.

Avant l'introduction de la solution, l'agitation est enclenchée. La solution est injectée dans le réacteur via une canule sous balayage d'argon à travers un sas d'injection. L'alimentation en argon est ensuite arrêtée. L'alimentation en éthylène est dans un premier temps réalisé à travers le sas d'injection, afin d'entraîner le cas échéant la solution se situant toujours dans le sas, jusqu'à une pression de 20 bar. Le sas est ensuite isolé du réacteur à proprement parler, l'alimentation en éthylène est poursuivie jusqu'à l'atteinte de la pression de polymérisation désirée (75 bar). La pression et la température du réacteur sont suivies, et enregistrées, au cours de la polymérisation. De l'éthylène est injecté à nouveau au cours de la polymérisation, si besoin en est, pour maintenir la pression constante.

En fin de polymérisation (après 3 h de réaction), le réacteur est refroidi jusqu'à 30 °C à l'aide d'un bain de glace, afin de pouvoir effectuer la dépressurisation, lente, du réacteur dans les meilleurs conditions de sécurité. Le réacteur est ensuite ouvert, et le mélange réactionnel récupéré dans un cristallisoir, qui est laissé à évaporer sous sorbonne une nuit durant. Le copolymère est finalement séché sous cloche à vide (60°C, 5 h).

Protocole de synthèse du copolymère EVA2, selon l'invention:

Le protocole décrit pour l'EVA1 a été répété, en modifiant le paramètre suivant :

- la durée de la réaction de polymérisation : 2 h 10 min.

Protocole de synthèse du copolymère EVA3, comparatif:

Le protocole décrit pour l'EVA1 a été répété, en modifiant les paramètres suivants :

- la quantité de l'AIBN (100 mg) et du 2-(4-méthoxyphénoxycarbonothiolthio)acétate de méthyle (500 mg) ;
- la durée de la réaction de polymérisation : 3 h 30 min.

Protocole de synthèse du copolymère EVA4, comparatif:

Le protocole décrit pour l'EVA1 a été répété, en modifiant les paramètres suivants :

- la quantité de l'AIBN (13 mg) et du 2-(4-méthoxyphénoxycarbonothiolthio)acétate de méthyle (68 mg) ;
- la durée de la réaction de polymérisation : 1 h 10 min.

Protocole de synthèse du copolymère EVA5, comparatif:

Le protocole décrit pour l'EVA1 a été répété, en modifiant les paramètres suivants :

- Utilisation du diphénylcarbamodithioate de cyanométhyle (260 mg) au lieu du 2-(4-méthoxyphénoxycarbonothiolthio)acétate de méthyle ;
- la quantité de l'acétate de vinyle (9 mL) et du DMC (41 mL).

Exemple 2 : Evaluation des performances de tenue à froid

Les polymères décrits dans l'exemple 1 ont été testés comme additifs de tenue à froid dans trois compositions de carburants de type gazole dénommées G1, G2 et G3, particulièrement difficiles à traiter, et dont les caractéristiques sont détaillées dans le tableau 2 ci-dessous :

[Table 2]

| Caractéristique | Méthode | G1 | G2 | G3 |
|---|---|---|---|---|
| Masse volumique à 15°C | ISO 12185 | 831,9 $kg/m^3$ | 828,6 $kg/m^3$ | 831,2 $kg/m^3$ |
| Viscosité à 20°C | ISO 3104 | 4,3 $mm^2/s$ | 3,9 $mm^2/s$ | 5,1 $mm^2/s$ |
| Viscosité à 40°C | ISO 3104 | 3,1 $mm^2/s$ | 2,6 $mm^2/s$ | 3,5 $mm^2/s$ |
| Point de trouble (PTR)° | EN 23015 | -5°C | -6°C | -3°C |
| Température limite de filtrabilité (TLF) | EN 116 | -5°C | -5°C | -2°C |
| Point d'écoulement (PTE) | ASTM D 7346 | -12°C | -12°C | -12°C |
| Teneur en paraffines | | 22,32% en poids | 20,64% en poids | 21,42% en poids |
| Teneur en n-paraffines C16+ | | 10,72% en poids | 9,41% en poids | 11,30% en poids |
| Profil de distillation D86 | ISO 3405 | | | |
| | Point initial | 163,2°C | 157,2°C | 173,0°C |
| | Point à 5% vol. | 188,8°C | 183,2°C | 196,6°C |

(suite)

| Caractéristique | Méthode | G1 | G2 | G3 |
|---|---|---|---|---|
| | Point à 10% vol. | 201,8°C | 191,0°C | 215,4°C |
| | Point à 20% vol. | 224,5°C | 212,8°C | 243,4°C |
| | Point à 30% vol. | 245,4°C | 234,6°C | 261,9°C |
| | Point à 40% vol. | 262,7°C | 255,0°C | 276,0°C |
| | Point à 50% vol. | 277,1°C | 272,5°C | 287,7°C |
| | Point à 60% vol. | 290,2°C | 287,9°C | 299,3°C |
| | Point à 70% vol. | 303,1°C | 302,1°C | 311,4°C |
| | Point à 80% vol. | 316,9°C | 317,8°C | 325,5°C |
| | Point à 90% vol. | 334,0°C | 336,7°C | 343,7°C |
| | Point à 95% vol. | 345,8°C | 348,9°C | 356,2°C |
| | Point final | 351,7°C | 353,0°C | 359,0°C |
| | Volume distillé | 98,0 ml | 97,7 ml | 97,4 ml |
| | Résidu | 1,8 ml | 1,0 ml | 0,6 ml |
| | Pertes | 0,2 ml | 1,2 ml | 1,8 ml |

Chaque copolymère a été ajouté à une teneur de 210 ppm en poids (0,021% en poids) à la composition G1, à la composition G2 et à la composition G3, pour donner les gazoles additivés G1a, G2a et G3a respectivement, dont on a ensuite mesuré la température limite de filtrabilité (TLF), conformément à la norme EN 116.

Les résultats obtenus pour les compositions de gazole G1a et G2a figurent dans le tableau 3 ci-dessous :

[Table 3]

| Copolymère | TLF G1a | Différence TLF G1 - TLF G1a |
|---|---|---|
| EVA1 | -15 | 10 |
| EVA2 | -14 | 9 |
| | TLF G2a | Différence TLF G2 - TLF G2a |
| EVA1 | -16 | 11 |
| EVA2 | -15 | 10 |

Les résultats ci-dessus montrent que l'utilisation des copolymères EVA1 et EVA2 selon l'invention conduit à un abaissement significatif de la TLF allant jusqu'à 10 ou 11 points dans les compositions de carburant G1a et G2a, respectivement, par rapport à chaque composition de carburant non additivé G1 et G2.

Les résultats obtenus pour la composition de gazole G3a figurent dans le tableau 4 ci-dessous :

[Table 4]

| Copolymère | TLF G3a | Différence TLF G3 - TLF G3a |
|---|---|---|
| EVA1 | -12 | 10 |
| EVA2 | -11 | 9 |
| EVA3 | -5 | 3 |
| EVA5 | -6 | 4 |

Les résultats ci-dessus montrent que l'utilisation des copolymères EVA1 et EVA2 selon l'invention conduit à un abaissement significatif de la TLF allant jusqu'à 10 points dans la composition de carburant G3a. Le copolymère

comparatif EVA3, dont la Mp n'est pas conforme à l'invention, conduit à un abaissement de 3 points seulement, bien inférieur aux copolymères selon l'invention. Le copolymère comparatif 2, dont la dispersité D est supérieure à 1,8, donc non conforme à l'invention, conduit à un abaissement de 4 points seulement, bien inférieur aux copolymères selon l'invention. Ces résultats montrent que c'est la combinaison des deux paramètres, Mp et *D*, qui permet l'obtention du meilleur gain en TLF.

## Revendications

1. Utilisation, pour diminuer la température limite de filtrabilité mesurée conformément à la norme NF EN 116 d'une composition de carburant ou de combustible, d'un ou plusieurs copolymère(s) formé(s) des motifs suivants :

   - de 75 à 95% en moles d'un motif de formule (I) suivante :

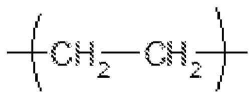

(I),

   et
   - de 5 à 25% en moles d'un ou plusieurs motif(s) de formule (II) suivante :

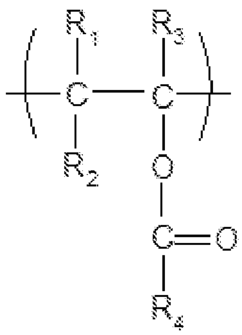

(II)

   dans laquelle $R_1$, $R_2$, et $R_3$, identiques ou différents, représentent un atome d'hydrogène ou un groupe alkyle en $C_1$ à $C_4$, et $R_4$ représente un groupe alkyle en $C_1$ à $C_{11}$,
   ledit copolymère ayant une masse molaire au pic comprise dans la gamme allant de 4000 à 7000 $g.mol^{-1}$, et une dispersité inférieure ou égale à 1,8, ces deux paramètres étant déterminés par chromatographie d'exclusion stérique.

2. Utilisation selon la revendication 1, **caractérisée en ce que** dans la formule (II) $R_1$, $R_2$, et $R_3$, identiques ou différents, représentent un atome d'hydrogène ou un groupe méthyle, et de préférence $R_1$, $R_2$, et $R_3$ représentent tous un atome d'hydrogène.

3. Utilisation selon l'une quelconque des revendications précédentes, **caractérisée en ce que** dans la formule (II) $R_4$ représente un groupe alkyle linéaire, de préférence $R_4$ est choisi parmi les groupes méthyle, éthyle, n-pentyle et n-undécyle ($n-C_{11}H_{23}$), et plus préférentiellement encore $R_4$ est un groupe méthyle.

4. Utilisation selon l'une quelconque des revendications précédentes, **caractérisée en ce que** ledit copolymère est choisi parmi : les copolymères de l'éthylène et d'un ou plusieurs ester(s) d'acide carboxylique en $C_1$ à $C_{12}$ et d'alcool vinylique, et de préférence parmi : les copolymères d'éthylène et d'acétate de vinyle ; les copolymères d'éthylène et de propionate de vinyle ; les terpolymères d'éthylène, d'acétate de vinyle et de propionate de vinyle ; les copolymères d'éthylène et d'hexanoate de vinyle ; les copolymères d'éthylène et de laurate de vinyle ; et les mélanges de ces copolymères ; et plus préférentiellement parmi les copolymères d'éthylène et d'acétate de vinyle.

5. Utilisation selon l'une quelconque des revendications précédentes, **caractérisée en ce que** ledit copolymère présente une masse molaire au pic comprise dans la gamme allant de 4200 à 6500 $g.mol^{-1}$, mieux de 4300 à 6000 $g.mol^{-1}$ et mieux encore de 4300 à 5000 $g.mol^{-1}$.

6. Utilisation selon l'une quelconque des revendications précédentes, **caractérisée en ce que** ledit copolymère présente une dispersité comprise dans la gamme allant de 1 à 1,8 ; de préférence de 1,1 à 1,7 ; et plus préférentiellement de 1,3 à 1,6.

7. Utilisation selon l'une quelconque des revendications précédentes, **caractérisée en ce que** le copolymère comprend de 77 à 92% en moles de motifs de formule (I), de préférence de 80 à 88% en moles, et plus préférentiellement de 82 à 87% en moles.

8. Utilisation selon l'une quelconque des revendications précédentes, **caractérisée en ce que** le copolymère comprend de 8 à 23% en moles de motifs de formule (II), plus préférentiellement de 12 à 20% en moles et mieux encore de 13 à 18% en moles.

9. Utilisation selon l'une quelconque des revendications précédentes, **caractérisée en ce que** le copolymère est un copolymère statistique.

10. Utilisation selon l'une quelconque des revendications précédentes, **caractérisée en ce que** la composition de carburant ou de combustible est choisie parmi les gazoles, les biodiesels, les gazoles de type $B_x$ contenant x% (v/v) d'esters d'huiles végétales ou animales ou d'acides gras avec x un nombre allant de 0 à 100, les huiles végétales hydrotraitées (HVO), et les fiouls tels que les fiouls domestiques (FOD).

11. Utilisation selon l'une quelconque des revendications précédentes, **caractérisée en ce que** ledit copolymère est employé à une teneur d'au moins 0,0005% en poids, par rapport au poids total de la composition de carburant ou de combustible, de préférence à une teneur allant de 0,001 à 0,2% en poids, plus préférentiellement de 0,005 à 0,1% en poids, et mieux encore de 0,01 à 0,04% en poids, par rapport au poids total de la composition de carburant ou de combustible.

12. Composition d'additifs comprenant un copolymère tel que défini dans l'une quelconque des revendications 1 à 9, et un ou plusieurs additif(s) de tenue à froid, différent(s) des copolymères constitués de motifs de formule (I) et de motifs de formule (II) ayant une masse molaire au pic Mp comprise dans la gamme allant de 4000 à 7000 $g.mol^{-1}$ et une dispersité inférieure ou égale à 1,8, choisis parmi les additifs d'anti-sédimentation et/ou dispersants de paraffines, les additifs boosters de TLF, les additifs améliorant les propriétés d'écoulement à froid (CFI), et les mélanges de ces additifs ; de préférence un ou plusieurs additif(s) anti-sédimentation et/ou dispersant de paraffines, plus préférentiellement choisis dans le groupe constitué par les copolymères acide (méth)acrylique/(méth)acrylate d'alkyle amidifiés par une polyamine, les produits de condensation d'un ou plusieurs acides carboxyliques avec une ou plusieurs polyamines, les alkénylsuccinimides de polyamine, les dérivés d'acide phtalamique et d'amine grasse à double chaîne, les résines alkylphénol éventuellement greffées, les résines alkylphénol-aldéhydes modifiées, et plus préférentiellement encore parmi les résines alkylphénol et les résines alkylphénol greffées par exemple par des groupes fonctionnels tels que des polyamines.

13. Composition de carburant ou de combustible, comprenant :

- au moins une coupe d'hydrocarbures issue d'une ou de plusieurs sources choisies parmi le groupe consistant en les sources minérales, animales, végétales et synthétiques, et
- au moins un copolymère tel que défini dans l'une quelconque des revendications 1 à 9.

14. Composition selon la revendication précédente, **caractérisée en ce qu'**elle contient ledit ou lesdits copolymère(s) en une teneur d'au moins 0,0005% en poids, par rapport au poids total de la composition de carburant ou de combustible, de préférence en une teneur allant de 0,001 à 0,2% en poids, plus préférentiellement de 0,005 à 0,1% en poids, et mieux encore de 0,01 à 0,04% en poids, par rapport au poids total de la composition de carburant ou de combustible.

15. Procédé pour abaisser la température limite de filtrabilité, mesurée conformément à la norme NF EN 116, d'une composition de carburant ou de combustible, comprenant une étape de traitement de ladite composition avec au moins un copolymère tel que défini dans l'une quelconque des revendications 1 à 9.

## Patentansprüche

1. Verwendung, um die gemäß der Norm NF EN 116 gemessene Filtrierbarkeits-Grenztemperatur einer Kraftstoff- oder Brennstoffzusammensetzung zu verringern, eines oder mehrerer Copolymere, die aus den folgenden Einheiten gebildet sind:

   - 75 bis 95 Mol-% einer Einheit der folgenden Formel (I):

   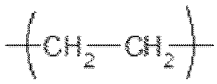 (I),

   und
   - 5 bis 25 Mol-% einer oder mehrerer Einheiten der folgenden Formel (II):

   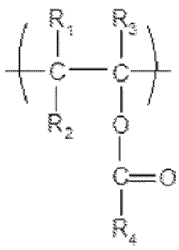 (II),

   wobei $R_1$, $R_2$ und $R_3$, identisch oder unterschiedlich, ein Wasserstoffatom oder eine $C_1$- bis $C_4$-Alkylgruppe darstellen, und $R_4$ eine $C_1$- bis $C_{11}$-Alkylgruppe darstellt,
   wobei das Copolymer eine Molmasse in der Spitze im Bereich von 4000 bis 7000 $g.mol^{-1}$ und eine Dispersität von kleiner oder gleich 1,8 aufweist, wobei diese zwei Parameter durch sterische Ausschlusschromatographie bestimmt werden.

2. Verwendung nach Anspruch 1, **dadurch gekennzeichnet, dass** in der Formel (II) $R_1$, $R_2$ und $R_3$, identisch oder unterschiedlich, ein Wasserstoffatom oder eine Methylgruppe darstellen, und bevorzugt $R_1$, $R_2$ und $R_3$ alle ein Wasserstoffatom darstellen.

3. Verwendung nach einem der vorstehenden Ansprüche, **dadurch gekennzeichnet, dass** in der Formel (II) $R_4$ eine geradkettige Alkylgruppe darstellt, bevorzugt $R_4$ ausgewählt ist aus Methyl-, Ethyl-, n-Pentyl- und n-Undecyl-Gruppen (n-$C_{11}H_{23}$), und noch bevorzugter $R_4$ eine Methylgruppe ist.

4. Verwendung nach einem der vorstehenden Ansprüche, **dadurch gekennzeichnet, dass** das Copolymer ausgewählt ist aus: Copolymeren von Ethylen und einem oder mehreren Estern von $C_1$- bis $C_{12}$-Carbonsäure und Vinylalkohol, und bevorzugt aus: Copolymeren von Ethylen und Vinylacetat; Copolymeren von Ethylen und Vinylpropionat; Terpolymeren von Ethylen, Vinylacetat und Vinylpropionat; Copolymeren von Ethylen und Vinylhexanoat; Copolymeren von Ethylen und Vinyllaurat; und Gemischen dieser Copolymere; und bevorzugter aus Copolymeren von Ethylen und Vinylacetat.

5. Verwendung nach einem der vorstehenden Ansprüche, **dadurch gekennzeichnet, dass** das Copolymer eine Molmasse in der Spitze im Bereich von 4200 bis 6500 $g.mol^{-1}$, besser von 4300 bis 6000 $g.mol^{-1}$ und noch besser von 4300 bis 5000 $g.mol^{-1}$ aufweist.

6. Verwendung nach einem der vorstehenden Ansprüche, **dadurch gekennzeichnet, dass** das Copolymer eine Dispersität im Bereich von 1 bis 1,8; bevorzugt von 1,1 bis 1,7; und bevorzugter von 1,3 bis 1,6 aufweist.

7. Verwendung nach einem der vorstehenden Ansprüche, **dadurch gekennzeichnet, dass** das Copolymer 77 bis 92 Mol-%, bevorzugt 80 bis 88 Mol-%, und bevorzugter 82 bis 87 Mol-% Einheiten der Formel (I) umfasst.

8. Verwendung nach einem der vorstehenden Ansprüche, **dadurch gekennzeichnet, dass** das Copolymer 8 bis 23

Mol-%, bevorzugter 12 bis 20 Mol-%, und noch besser 13 bis 18 Mol-% Einheiten der Formel (II) umfasst.

**9.** Verwendung nach einem der vorstehenden Ansprüche, **dadurch gekennzeichnet, dass** das Copolymer ein statistisches Copolymer ist.

**10.** Verwendung nach einem der vorstehenden Ansprüche, **dadurch gekennzeichnet, dass** die Kraftstoff- oder Brennstoffzusammensetzung ausgewählt ist aus Gasölen, Biodieseln, Gasölen vom Typ $B_x$, die x % (v/v) Ester von pflanzlichen oder tierischen Ölen oder Fettsäuren enthalten, wobei x eine Zahl von 0 bis 100 ist, hydrierten Pflanzenölen (HVO) und Heizölen, wie etwa Haushalts-Heizölen (FOD).

**11.** Verwendung nach einem der vorstehenden Ansprüche, **dadurch gekennzeichnet, dass** das Copolymer mit einem Gehalt von mindestens 0,0005 Gew.-%, bezogen auf das Gesamtgewicht der Kraftstoff- oder Brennstoffzusammensetzung, bevorzugt mit einem Gehalt von 0,001 bis 0,2 Gew.-%, bevorzugter von 0,005 bis 0,1 Gew.-% und noch besser von 0,01 bis 0,04 Gew.-%, bezogen auf das Gesamtgewicht der Kraftstoff- oder Brennstoffzusammensetzung, eingesetzt wird.

**12.** Additivzusammensetzung, die ein Copolymer, wie in einem der Ansprüche 1 bis 9 definiert, und ein oder mehrere kältebeständige Additive umfasst, die sich von den Copolymeren, die aus Einheiten der Formel (I) und Einheiten der Formel (II) bestehen, unterscheiden, die eine Molmasse in der Spitze Mp im Bereich von 4000 bis 7000 $g.mol^{-1}$ und eine Dispersität von kleiner oder gleich 1,8 aufweisen, ausgewählt aus Paraffin-Antiabsetz- und/oder Dispergiermittel-Additiven, TLF-Booster-Additiven, Additiven, die die Kaltfließeigenschaften (CFI) verbessern, und Gemischen dieser Additive; bevorzugt ein oder mehrere Paraffin-Antiabsetz- und/oder Dispergiermittel-Additive, bevorzugter ausgewählt aus der Gruppe bestehend aus durch ein Polyamin amidierten (Meth)acrylsäure/Alkyl (meth)acrylat-Copolymeren, Kondensationsprodukten einer oder mehrerer Carbonsäuren mit einem oder mehreren Polyaminen, Polyamin-Alkenylsuccinimiden, Derivaten von Phtalaminsäure und doppelkettigem Fettamin, gegebenenfalls gepfropften Alkylphenolharzen, modifizierten Alkylphenol-Aldehydharzen und noch bevorzugter aus Alkylphenolharzen und zum Beispiel mit funktionellen Gruppen, wie etwa Polyaminen, gepfropften Alkylphenolharzen.

**13.** Kraftstoff- oder Brennstoffzusammensetzung, umfassend:

- mindestens eine Kohlenwasserstofffraktion, die aus einer oder mehreren Quellen stammt, ausgewählt aus der Gruppe bestehend aus mineralischen, tierischen, pflanzlichen und synthetischen Quellen, und
- mindestens ein Copolymer, wie in einem der Ansprüche 1 bis 9 definiert.

**14.** Zusammensetzung nach dem vorstehenden Anspruch, **dadurch gekennzeichnet, dass** sie das oder die Copolymer(e) in einem Gehalt von mindestens 0,0005 Gew.-%, bezogen auf das Gesamtgewicht der Kraftstoff- oder Brennstoffzusammensetzung, bevorzugt in einem Gehalt von 0,001 bis 0,2 Gew.-%, bevorzugter von 0,005 bis 0,1 Gew.-%, und noch besser von 0,01 bis 0,04 Gew.-%, bezogen auf das Gesamtgewicht der Kraftstoff- oder Brennstoffzusammensetzung enthält.

**15.** Verfahren, um die gemäß der Norm NF EN 116 gemessene Filtrierbarkeits-Grenztemperatur einer Kraftstoff- oder Brennstoffzusammensetzung zu senken, das einen Schritt des Behandelns der Zusammensetzung mit mindestens einem Copolymer, wie in einem der Ansprüche 1 bis 9 definiert, umfasst.

## Claims

**1.** Use, for reducing the cold filter plugging point measured in accordance with standard NF EN 116 of a fuel composition, of one or more copolymers formed by the following units:

- from 75 to 95 mol% of a unit of following formula (I):

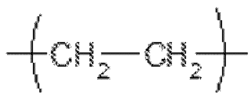

(I),

and
- from 5 to 25 mol% of one or more unit(s) of following formula (II):

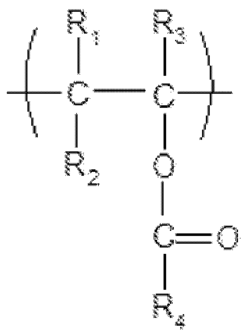

(II)

wherein $R_1$, $R_2$, and $R_3$, which are identical or different, represent a hydrogen atom or a $C_1$-$C_4$ alkyl group, and $R_4$ represents a $C_1$-$C_{11}$ alkyl group,
said copolymer having a peak molar mass in the range of 4000 to 7000 $g.mol^{-1}$ and a dispersity of 1.8 or less, both parameters being determined by steric exclusion chromatography.

2. Use according to claim 1, **characterised in that** in formula (II) $R_1$, $R_2$, and $R_3$, which are identical or different, represent a hydrogen atom or a methyl group, and preferably $R_1$, $R_2$, and $R_3$ all represent a hydrogen atom.

3. Use according to any of the preceding claims, **characterised in that** in formula (II), $R_4$ represents a linear alkyl group, preferably $R_4$ is selected from methyl, ethyl, n-pentyl and n-undecyl (n-$C_{11}H_{23}$), and even more preferably $R_4$ is a methyl group.

4. Use according to any one of the preceding claims, **characterised in that** said copolymer is selected from: copolymers of ethylene and of one or more ester(s) of $C_1$-$C_{12}$ carboxylic acid and of vinyl alcohol, and preferably from: copolymers of ethylene and vinyl acetate; copolymers of ethylene and vinyl propionate; terpolymers of ethylene, vinyl acetate and vinyl propionate; copolymers of ethylene and vinyl hexanoate; copolymers of ethylene and vinyl laurate; and mixtures of these copolymers; and more preferably from copolymers of ethylene and vinyl acetate.

5. Use according to any one of the preceding claims, **characterised in that** said copolymer has a peak molar mass in the range from 4200 to 6500 $g.mol^{-1}$, better from 4300 to 6000 $g.mol^{-1}$ and still better from 4300 to 5000 $g.mol^{-1}$.

6. Use according to any one of the preceding claims, **characterised in that** said copolymer has a dispersity in the range of from 1 to 1.8; preferably from 1.1 to 1.7; and more preferably from 1.3 to 1.6.

7. Use according to any one of the preceding claims, **characterised in that** the copolymer comprises from 77 to 92 mol% of units of the formula (I), preferably from 80 to 88 mol%, and more preferably from 82 to 87 mol%.

8. Use according to any one of the preceding claims, **characterised in that** the copolymer comprises from 8 to 23 mol% of units of the formula (II), more preferably from 12 to 20 mol% and still better from 13 to 18 mol%.

9. Use according to any one of the preceding claims, **characterised in that** the copolymer is a random copolymer.

10. Use according to any one of the preceding claims, **characterised in that** the fuel composition is selected from gas oils, biodiesels, $B_x$ type gas oils containing x% (v/v) of esters of vegetable or animal oils or fatty acids with x a number ranging from 0 to 100, hydrotreated vegetable oils (HVO), and fuel oils such as domestic fuel oils (DFO).

11. Use according to any one of the preceding claims, **characterised in that** said copolymer is employed at a content of at least 0.0005% by weight, based on the total weight of the fuel composition, preferably at a content ranging from 0.001 to 0.2% by weight, more preferably from 0.005 to 0.1% by weight, and still better from 0.01 to 0.04% by weight, based on the total weight of the fuel composition.

12. An additive composition comprising a copolymer as defined in any of claims 1 to 9, and one or more cold resistance

additive(s), different from the copolymers consisting of units of the formula (I) and units of the formula (II) having a peak molar mass Mp in the range of from 4000 to 7000 $g.mol^{-1}$ and a dispersity less than or equal to 1.8, selected from wax anti-settling and/or dispersant additives, CFPP booster additives, cold flow property (CFI) improver additives, and mixtures of these additives; preferably one or more wax anti-settling and/or dispersant additive(s), more preferably selected from the group consisting of polyamine amidated (meth)acrylic acid/alkyl (meth)acrylate copolymers, condensation products of one or more carboxylic acids with one or more polyamines, polyamine alkenylsuccinimides, phthalamic acid and double-chain fatty amine derivatives, optionally grafted alkylphenol resins, modified alkylphenol-aldehyde resins, and even more preferably alkylphenol resins and alkylphenol resins grafted, for example, with functional groups such as polyamines.

**13.** A fuel composition, comprising:

- at least one hydrocarbon fraction derived from one or more sources selected from the group consisting of mineral, animal, vegetable and synthetic sources, and
- at least one copolymer as defined in anyone of claims 1 to 9.

**14.** The composition according to the preceding claim, **characterised in that** it contains said copolymer(s) in a content of at least 0.0005% by weight, based on the total weight of the fuel composition, preferably in a content ranging from 0.001 to 0.2% by weight, more preferably from 0.005 to 0.1% by weight, and still better from 0.01 to 0.04% by weight, based on the total weight of the fuel composition.

**15.** A process for lowering the cold filter plugging point, measured in accordance with standard NF EN 116 of a fuel composition, comprising a step of treating said composition with at least one copolymer as defined in anyone of claims 1 to 9.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2020141126 A1
- EP 261959 A
- EP 593331 A
- EP 674689 A
- EP 327423 A
- EP 512889 A
- EP 832172 A
- US 20050223631 A
- US 5998530 A
- WO 9314178 A
- WO 2012085865 A
- EP 1881053 A
- EP 1881055 A
- US 20110271586 A
- WO 2011001352 A
- EP 861882 A
- EP 663000 A
- EP 736590 A
- EP 0938535 A
- US 20120010112 A
- WO 2012004300 A
- FR 1761700
- EP 680506 A
- EP 860494 A
- WO 9804656 A
- EP 915944 A
- FR 2772783
- FR 2772784